**Europäisches Patentamt**

**European Patent Office**

**Office européen des brevets**

(11) Veröffentlichungsnummer: **0 072 965**

**A1**

# (12) EUROPÄISCHE PATENTANMELDUNG

(21) Anmeldenummer: **82107207.1**

(22) Anmeldetag: **10.08.82**

(51) Int. Cl.³: **E 04 F 13/08**
**E 04 F 13/10**

(30) Priorität: **14.08.81 DE 3132132**

(43) Veröffentlichungstag der Anmeldung:
**02.03.83 Patentblatt 83/9**

(84) Benannte Vertragsstaaten:
**AT BE CH DE FR GB IT LI NL SE**

(71) Anmelder: **Wengler, Georg**
**Bachweg 7**
**D-8229 Kirchanschöring(DE)**

(72) Erfinder: **Wengler, Georg**
**Bachweg 7**
**D-8229 Kirchanschöring(DE)**

(74) Vertreter: **Flach, Dieter Rolf Paul, Dipl.-Phys.**
**Patentanwälte Andrae-Flach-Haug Max-Josefs-Platz 6/III**
**D-8200 Rosenheim(DE)**

(54) Schraubbefestigung.

(57) Die Erfindung schafft eine Schraubbefestigung zwischen einer Latte (2) und einer Decke oder Wand (1) eines Bauwerks, bei welcher eine Halteschraube (9) von der Lattenunter- oder -außenseite her durch eine Schraubenaufnahmebohrung (4) in einen in der Decke oder Wand gesetzten Dübel (3) verläuft und mit diesem verschraubt ist. Um Unebenheiten der Decke oder Wand auszugleichen, ist der Kopf (8) der Halteschraube (9) in die Latte so eingespannt, daß er darin axial ohne Spiel, jedoch drehbar gelagert ist. Dies geschieht durch eine Abstützscheibe (6), welche einen zentralen Schraubdreherdurchtritt (7) von kleinerem Durchmesser als der Halteschraubenkopf (8) aufweist und mittels mehrerer uber den Umfang verteilter Stützschrauben (11, 12) mit der Unterkonstruktion (Latte 2) verschraubt ist. Der Kopf der Halteschraube (8) liegt also in seiner von der Decke oder Wand (1) abgewandten Seite gegen die Abstützscheibe (6) an seiner der Decke oder Wand (1) zugewandten Seite entweder gegen die Latte (2) oder - gemäß einer Weiterbildung der Erfindung - gegen eine Gegenabstützscheibe (10) an, die ihrerseits mittels Befestigungsschrauben (11, 12) mit der Latte (2) verschraubt ist.

FIG. 1

## PATENTANWÄLTE

# ANDRAE · FLACH · HAUG · OTTO 0072965

## EUROPEAN PATENT ATTORNEYS

. Patentanwalt Dipl.-Phys. Flach, Max-Josefs-Platz 6, D-8200 Rosenheim .

**ROSENHEIM**
Dipl.-Phys. Dieter Flach
Max-Josefs-Platz 6
D-8200 Rosenheim
Telefon: (0 80 31) 1 93 52
Telegramm: Physicist Rosenheim

**MÜNCHEN**
Dipl.-Chem. Dr. Steffen Andrae
Dipl.-Ing. Dietmar Haug
Dipl.-Ing. Dr. Dieter Otto
Steinstraße 44
D-8000 München 80
Telefon: (0 89) 48 20 89
Telegramm: pagema München
Telex: 5 216 281 afho d

— | —

Georg Wengler, Bachweg 7, 8229 Kirchanschöring
Bundesrepublik Deutschland

291 P 5

-----------------------------------------

Schraubbefestigung

-----------------------------------------

Die Erfindung betrifft eine Schraubbefestigung
nach dem Oberbegriff des Patentanspruches 1.

Eine solche Befestigung ist z. B. durch die
DE-OS 22 62 890 bekannt geworden.

- 2 -

G. Wengler                    291 P 5

Sollen Decken oder Wände von Bauwerken mit Holzbrettern, Paneelen, Akustikplatten und dergleichen verschalt werden, so ist die vorherige Anbringung einer Lattung üblich. Es kann hierbei eine einfache oder doppelte Lattung gewählt werden, wobei sich im Falle einer doppelten Lattung, bei welcher eine zweite Lattenschar auf einer ersten Lattenschar rechtwinklig befestigt wird, ein besserer Ausgleich von Decken- und Wandunebenheiten ergibt. Gleichwohl ist insbesondere beim Innenausbau in jedem Fall ein besonders sorgfältiger Ausgleich von Wandunebenheiten beim Anbringen der Lattung erforderlich, da sich sonst insbesondere bei streifendem Lichteinfall diese Unebenheiten an der Verschalung sehr stark abheben. Bisher war es üblich, beim Festschrauben der Lattung derartige Decken- und Wandunebenheiten durch Einlegen von kleinen Holzklötzchen, Keilen und dergleichen zwischen die Decke oder Wand und die betreffende Latte auszugleichen (S. DE-OS 22 62 890). Dies ist aber sehr zeitaufwendig, insbesondere dann, wenn lange Latten zu verarbeiten sind, die mit einer größeren Anzahl von Halteschrauben zu befestigen sind.

Eine Befestigungsvorrichtung zur Abstandsmontage ist beispielsweise auch aus der DE-OS 27 12 670 bekannt geworden, die insbesondere für Fensterrahmen dient. Diese Befestigungsvorrichtung weist

G. Wengler                           291 P 5

einen hülsenartigen Abstandshalter mit das Bauteil hintergreifenden Anschlagmitteln mit einem über die Stirnseite des Schraubenkopfes übergreifenden Bund auf. Nachteilhaft in dieser Befestigungsvorrichtung ist, daß sie nur zum Befestigen von Bauteilen mit einer ganz bestimmten vorgegebenen Dicke geeignet ist, da die Vorrichtung dieses Bauteil hintergreifen muß. Ist zudem in das Bauteil eine leicht schräge Bohrung eingebracht worden, so treten zusätzliche Probleme beim Hintergreifen auf. Ferner steht die hülsenartige Befestigungsvorrichtung auf der Vorderseite über das zu befestigende Bauteil über. Als weiterhin nachteilhaft erweist sich auch, daß diese Befestigungsvorrichtung nach dem Anbringen an einem zu befestigenden Bauteil praktisch nicht mehr entfernt werden kann, sodaß dadurch bei der Montage immer wieder Probleme auftreten.

Aufgabe der Erfindung ist die Schaffung einer verbesserten Schraubbefestigung, welche ohne Einlegen von Unterlagteilen zwischen der Latte und einer Decke oder Wand einen schnellen Ausgleich von Unebenheiten bei einfachster Montage ermöglicht. Die Aufgabe wird erfindungsgemäß entsprechend den im kennzeichnenden Teil des Anspruches 1 angegebenen Merkmalen gelöst.

Durch den Erfindungsgedanken wird erreicht, daß der Halteschraubenkopf zwischen der Abstützscheibe und

G. Wengler                          291 P 5

- 4 -

der Latte ohne jedes Axialspiel, jedoch drehbar eingespannt ist. Infolgedessen ist es möglich, zwischen der Decke oder Wand und der Latte jeden gewünschten Abstand zu fixieren, selbstverständlich im Rahmen der maximal auftretenden Decken- oder Wandunebenheiten. Es brauchen also nicht mehr, wie dies bisher der Fall war, die Decken- oder Wandunebenheiten zwischen die Latte und die Decke oder Wand versuchsweise Unterlageteile eingebracht, die Halteschraube angezogen, die richtige Einstellung der Latte mit der Wasserwaage nachgemessen und gegebenenfalls der ganze Vorgang mehrmals wiederholt werden. Vielmehr ist es erfindungsgemäß möglich, bei angelegter Wasserwaage mit einer einzigen Einstellung der Halteschraube einen präzise horizontalen Verlauf der Latte über deren gesamte Länge zu gewährleisten. Dies gilt selbstverständlich auch für die Ausrichtung parallel zueinander verlaufender Latten. Als besonders vorteilhaft erweist sich dabei auch die einfache Montage der Befestigungsvorrichtung, da die Abstützscheibe beispielsweise lediglich auf den Lattenrost aufgelegt und dann festgeschraubt zu werden braucht. Auch eine Demontage ist höchst leicht vorzunehmen.

Durch die wahlweisen Weiterbildungen nach den Patentansprüchen 2 bis 4 wird eine Anwendung des Erfindungsgedankens in Verbindung mit Senkkopfschrauben, Rundkopfschrauben und Zylinderkopfschrauben ermöglicht.

G. Wengler                    291 P 5

- 5 -

In besonders vorteilhafter und einfacher Weise wird bei der erfindungsgemäßen Schraubbefestigung auch die Forderung nach einem axial spielfreien Sitz des Halteschraubenkopfes erfüllt. Am ehesten läßt sich diese Forderung bei den vorangehend abgehandelten Ausführungsformen nach den Patentansprüche 1-4 in Verbindung mit Senkkopfschrauben erreichen, wenn die Schraubenaufnahmebohrung einen etwas größeren Durchmesser als der Schaft der Halteschraube aufweist. Dies trifft für die meisten Anwendungsfälle zu, weil üblicherweise die Schraubenaufnahmebohrung einen dem zu verwendenden Dübel entsprechenden Druchmesser aufweist. Wird nun nach Einbringen der Halteschraube die Abstützscheibe mit der Latte verschraubt, so drückt sich die Halteschraube mit ihrem Senkkopf in das (meist aus Weichholz bestehende) Material der Latte ein, und es wird die Forderung nach dem Fehlen eines Axialspiels des Halteschraubenkopfes gegenüber der Latte erfüllt. Bei Verwendung von Rundkopf- und Zylinderkopf-Halteschrauben läßt sich diese Forderung zwar grundsätzlich ebenfalls erfüllen, jedoch wird bei richtiger Einspannung der Halteschraubenkopf infolge seiner großen ringförmigen Anlagefläche gegenüber der Latte entsprechend schwergängig sein. Durch die Weiterbildung nach dem Patentanspruch 5 wird nun erreicht, daß der Halteschraubenkopf zwischen der Abstützscheibe und der Gegenabstützscheibe eingespannt ist, die, wenn sie aus Metall oder Kunststoff bestehen, infolge der Möglichkeit einer präzisen Formung den Halteschraubenkopf einer-

G. Wengler                          291 P 5

seits axial spielfrei, andererseits aber leicht
drehbar aufzunehmen vermögen.

In einer Ausgestaltung der Erfindung nach Anspruch
6 ist dabei vorgesehen, daß die Gegenabstützscheibe
mittels Schrauben an der Latte und die Abstützscheibe mittels weiterer Schrauben an der Gegenabstützscheibe befestigbar ist. Demgegenüber ist
in einer vorteilhaften Ausgestaltung der Erfindung
nach Anspruch 7 vorgesehen, daß die Abstützscheibe
selbst mittels Schrauben so an einer Latte befestigbar ist, daß die Schrauben durch entsprechend vorgesehene Schraubenlöcher in der Gegenabstützscheibe
hindurchragen und diese dadurch mithalten.

Durch die Ausgestaltungen nach den Patentansprüchen
8 und 9 wird eine Anwendung insbesondere auch in
Verbindung mit Zylinderkopf- und Senkkopf-Halteschrauben ermöglicht.

Durch die Weiterbildung nach dem Patentanspruch 10
wird eine präzise maßliche Dimensionierung der Abstützscheibe und gegebenenfalls der Gegenabstützscheibe ermöglicht. Dieser Vorteil ergibt sich auch
bei der wahlweisen Ausgestaltung nach dem Patentanspruch 11, jedoch mit dem zusätzlichen Vorteil,
daß durch die Schmierfähigkeit des Kunststoffes
auch bei fester Einspannung des Halteschraubenkopfes eine leichte Drehbarkeit ohne zusätzliches
Schmiermittel gewährleistet bleibt.

G. Wengler                                    291 P 5

In einer vorteilhaften Ausgestaltung der Erfindung nach Anspruch 12 sind die Löcher und Durchtritte auf einfache Art und Weise in der Abstützscheibe und der Gegenabstützscheibe in Form vonPreßsenkungen ausgebildet.

Die Montage der erfindungsgemäßen Befestigungseinrichtung kann dadurch noch weiter verbessert werden, daß in einer vorteilhaften Weiterbildung der Erfindung nach Anspruch 13 die Abstützscheibe an der Gegenabstützscheibe verkant- bzw. verklemmbar befestigbar ist. D.h. beim Montieren braucht, nachdem der Halteschraubenkopf durch die Durchtrittsöffnung in der Gegenabstützscheibe gesteckt und in den Dübel gedreht ist, die Abstützscheibe lediglich noch auf die Gegenabstützscheibe aufgeklemmt werden. Durch die selbsttätige Halteeinrichtung kann danach leicht und problemlos die Befestigung der Abstütz- und der Gegenabstützscheibe mittels Schrauben an der Latte erfolgen.

In den Ansprüchen 14 und 15 sind zwei vorteilhafte Ausgestaltungen der Erfindung für diese Verkant- bzw. Verklemmeinrichtung zwischen der Abstützscheibe und der Gegenabstützscheibe erläutert.

Die Erfindung ist nachstehend anhand von Zeichnungen näher erläutert. Es zeigen:

Figur 1:    ein Ausführungsbeispiel einer erfindungs-
            gemäßen Schraubbefestigung in einem Ver-
            tikalebenenschnitt durch eine Raumdecke;

G. Wengler                          291 P 5

Figur 2:     eine Ansicht längs der Linie II-II von

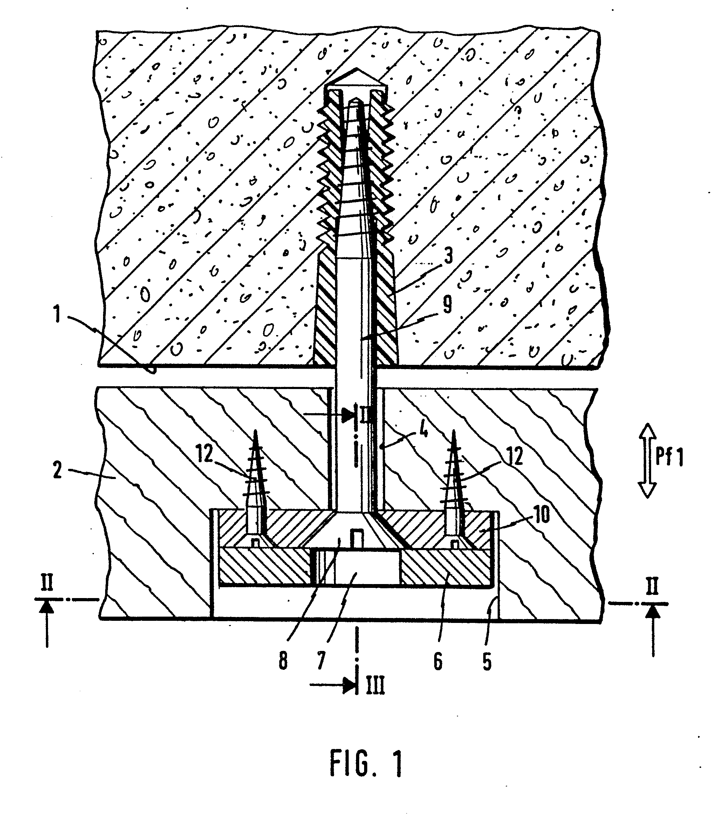

             Fig. 1 in demgegenüber verkleinerter
             Darstellung;

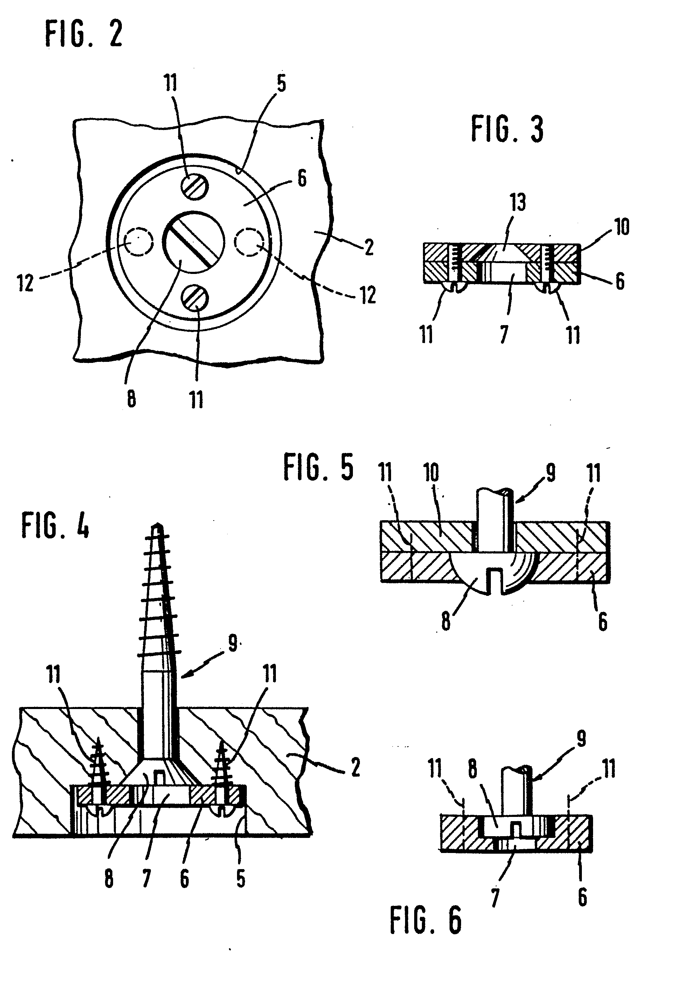

Figur 3:     einen Schnitt längs der Linie III-III
             von Fig. 1, in einer der Fig. 2 entsprechenden maßstäblichen Darstellung;

Figur 4:     ein gegenüber Fig. 1 bis 3 abgewandeltes
             und demgegenüber vereinfachtes Ausführungsbeispiel einer erfindungsgemäßen
             Schraubbefestigung in einer Schnittdarstellung ähnlich Fig. 1;

Figur 5 und 6:   weitere abgewandelte Ausführungs-
                 beispiele erfindungsgemäßer Schraub-
                 befestigungen in Darstellung ähn-
                 lich Fig. 4;

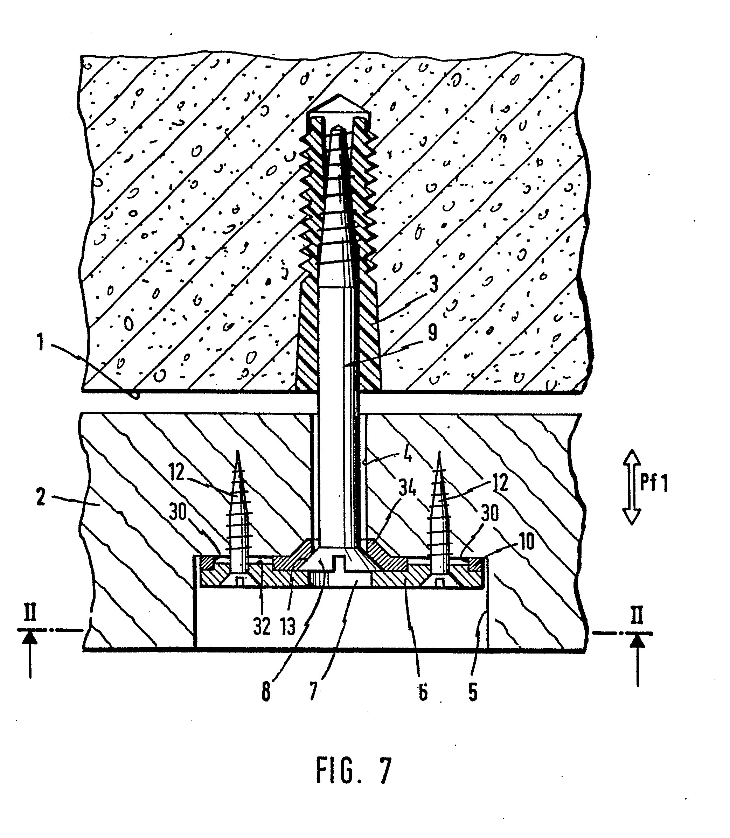

Figur 7:     ein abgewandeltes Ausführungsbeispiel
             der Schraubbefestigung mit einer Verklemm-
             bzw. Verkanteinrichtung;

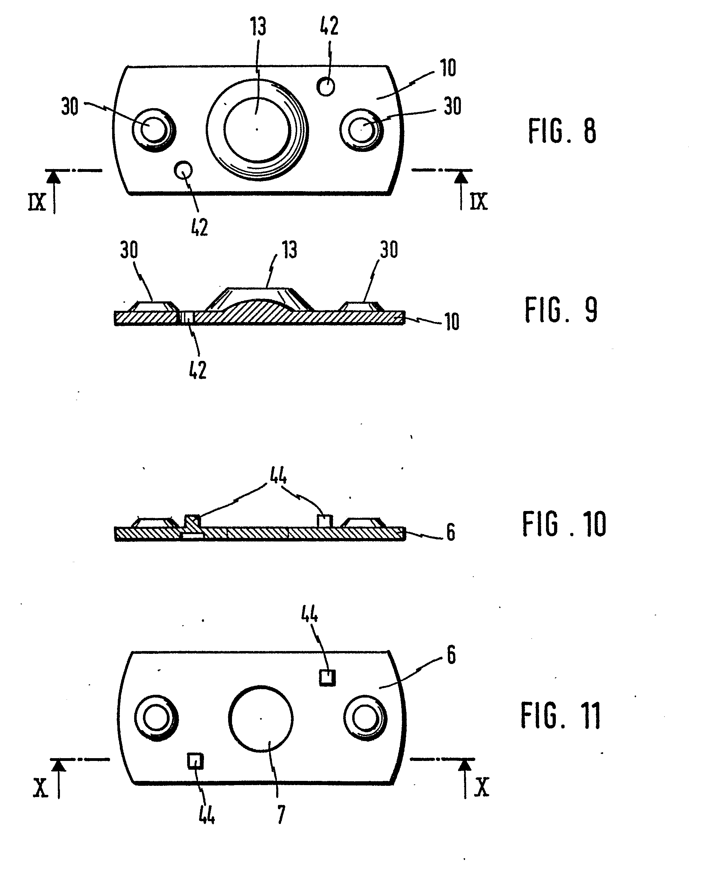

Figur 8 bis 11:  eine weitere alternative Ausführungsform der Schraubbefestigung mit einer
                 anderen Verklemm- bzw. Verkanteinrichtung.

In einer Raumdecke 1 sind zur Befestigung einer Unterkonstruktion 2 in einer geraden Linie mehrere Dübel
3 gesetzt, von denen lediglich ein einziger dargestellt ist. Im nachfolgenden wird die Unterkonstruktion kurz als Latte 2 bezeichnet.

G. Wengler 291 P 5

- 9 -

In Ausrichtung zu jedem Dübel 3 ist die Latte 2 mit je einer Bohrung 4 versehen, die in Abweichung zu Fig. 1 auch einen dem Dübel 3 entsprechenden Durchmesser aufweisen kann.

An der Unterseite der Latte 2 ist eine zu der Bohrung 4 konzentrische Sackbohrung 5 zur Aufnahme einer Abstützscheibe 6 vorgesehen, welche eine zentrale Ausnehmung 7 für einen Schraubendreher von kleinerem Durchmesser als der Kopf 8 einer Halteschraube 9 aufweist.

Die Abstützscheibe 6 ist mit einer Gegenabstützscheibe 10 gleichen Durchmessers mittels zweier diametraler Stützschrauben 11 konzentrisch plan verschraubt. Die Gegenabstützscheibe 10 ist ihrerseits mittels zweier diametraler Befestigungsschrauben 12 (die im vorliegenden Fall Holzgewinde aufweisen) mit der Latte 2 verschraubt. Die Gegenabstützscheibe 10 weist einen zu der zentralen Ausnehmung 7 konzentrischen Schraubenschaftdurchtritt 13 für die Schraube 9 auf, welcher sich bei Anwendung in Verbindung mit einer Senkkopf-Halteschraube, wie in Fig. 1 dargestellt ist, zu der Lattenunterseite hin konisch erweitert (vgl. insbesondere Fig. 3).

Der Kopf 8 der Halteschraube 9 ist daher zwischen der Abstützscheibe 6 und der Gegenabstützscheibe 10 praktisch ohne jedes Axialspiel, jedoch drehbar aufgenommen.

- 10 -

Da die Gegenabstützscheibe 10 mit der Latte 2 fest verbunden ist, kann also durch mehr oder minder weites Eindrehen der Halteschraube 9 in den Dübel 3 die Latte 2 gegenüber der Raumdecke 1 gemäß dem Doppelpfeil Pf1 mit beliebigem Abstand eingestellt werden, um Deckenunebenheiten auszugleichen.

Das Ausführungsbeispiel nach Fig. 5 entspricht im wesentlichen demjenigen nach Fig. 1, lediglich mit dem Unterschied, daß die Halteschraube 9 einen Rundkopf 8 aufweist. Dementsprechend ist der Schraubenschaftdurchtritt der Gegenabstützscheibe 10 zylindrisch ausgebildet, während die Ausnehmung für den Schraubendreher in der Abstützscheibe 6 entsprechend der Form des Rundkopfes 8 ballig gestaltet ist.

Bei dem Ausführungsbeispiel nach Fig. 4 ist lediglich die Abstützscheibe 6 vorgesehen, welche mittels Schrauben 11 unmittelbar an der Latte 2 verschraubt ist. Der Senkkopf 8 der Halteschraube 9 wird hierbei gegen das Material der Latte 2 gedrückt und einerseits axial unverschieblich, andererseits aber drehbar gehalten. Es handelt sich hier also um ein gegenüber Fig. 1 vereinfachtes Ausführungsbeispiel für Senkkopf-Halteschrauben.

Gemäß Fig. 6 ist eine Halteschraube 9 mit einem zylindrischen Schraubenkopf 8 versehen.

G. Wengler                          291 P 5

Die Abstützscheibe weist hierbei eine abgestufte
Ausnehmung 7 für den Schraubendreher auf.

Es versteht sich, daß auch die Abstützscheibe 6
gemäß Fig. 5 ohne die Gegenabstützscheibe 10 in
einer Schraubbefestigung analog Fig. 4 verwendet
werden kann. Andererseits kann zum Beispiel auch
die Schraubbefestigung gemäß Fig. 6 in Verbindung
mit einer Gegenabstützscheibe 10 in einer Schraubbefestigung analog derjenigen von Fig. 1 bis 3
verwendet werden.

Es ist noch zu erwähnen, daß bei dem Ausführungsbeispiel nach Fig. 1 bis 3 statt der Scheibe 6 ein
kurzes Blechstück verwendet werden kann, welches
die Scheibe 10 vom Rand aus nur bis über den Kopf
8 der Schraube 9 überdeckt und ebenfalls eine Ausnehmung 7 für den Schraubendreher aufweist. Im Randbereich der Scheibe 10 ist das Blechstück durch
lediglich eine Schraube 11 gehalten, kann aber dennoch eine Abstützfunktion erfüllen.

Wie insbesondere aus Fig. 7 zu ersehen ist, sind
in der Gegenabstützscheibe 10 Schraubenlöcher 30
vorgesehen. Die Abstützscheibe 6 ist durch eine
Pressung hergestellt worden, wobei eine der Decke
1 zugewandte liegende Preßsenkung 32 entstanden
ist, deren Durchmesser gleich groß oder kleiner als
die Schraubenlöcher 30 sind. Die Pressung der Ab-

G. Wengler                          291 P 5

- 12 -

stützscheibe 6 kann dergestalt vorgenommen werden,
daß die Schraubenlöcher 30 für die Schrauben 12
trichterförmig zur Verwendung von Senkkopfschrauben
ausgebildet sind.

Darüber kann, wie in Fig. 7 nicht näher dargestellt
ist, die Preßsenkung 32 an ihrem Umfangsrand eine
Rifflung aufweisen, sodaß bei der Montage die beiden
Scheiben 6 und 10 mit dem dazwischen liegenden Kopf
8 der Halteschraube 9 leicht aufeinandergesteckt
werden, wobei die beiden Scheiben 6 und 10 automatisch aneinander gehalten werden. Die Montage kann
also einfach dadurch erfolgen, daß die Gegenabstützscheibe 10 zunächst soweit in den Dübel 3
eingedreht wird,bis die Gegenabstützscheibe 10 auf
dem Lattenrost 2 bzw. der Holzplatte 2 anliegt. Danach wird lediglich die Abstützscheibe 6 aufgesteckt,
die dann automatisch aufgrund der Riffelung mittels
des dadurch bewirkten Klemm- bzw. Verkanteffektes
an der Gegenabstützscheibe 10 hält. Durch dieses
Aufstecken wird zudem die gewünschte Zentrierung
beider Scheiben 6 und 10 erzielt, sodaß dann lediglich die Befestigung der Abstützscheibe 6 durch Einschrauben der beiden Befestigungsschrauben 12 erfolgt.

Darüber hinaus können im gezeigten Ausführungsbeispiel für die Befestigungsschrauben 12 Holzschrauben
verwendet werden, die erheblich billiger als Metallschrauben sind.

- 13 -

G. Wengler                              291 P 5

In dem gezeigten Ausführungsbeispiel ist auch die Gegenabstützscheibe 10 mittels Pressung hergestellt, wobei sich die in der Mitte gebildete Senkung 34 in die Holzplatte 2 eindrückt. Ferner können auch die Schraubenlöcher 30 mittels Preßsenkung hergestellt sein, wie nicht näher gezeigt ist.

In dem in den Figuren 8 bis 11 gezeigten Ausführungsbeispiel für die Befestigungseinrichtung werden als Abstützscheibe und als Gegenabstützscheibe im wesentlichen längliche Platten verwendet, wobei natürlich die Form dieser Platten nicht wesentlich für die Erfindung ist. Dieses Ausführungsbeispiel weist ebenfalls eine Verklemm- bzw. Verkanteinrichtung zwischen der Gegenabstützscheibe und der Abstützscheibe wie im vorangehenden Ausführungsbeispiel auf.

In Fig. 8 und 11 ist dabei die Gegenabstützscheibe 10 und die Abstützscheibe 6, und in den Figuren 9 und 10 jeweils ein Schnitt längs der Linie IX-IX in Fig. 8 und längs der Linie X-X in Fig. 11 gezeigt.

Wie in Fig. 9 gezeigt, sind in der Gegenabstützscheibe 10 zu den Schraubenlöchern 30 versetzt angeordnete Haltelöcher 42 mit geringerem Durchmesser eingebracht. An den entsprechenden Stellen sind in der Abstützscheibe 6 mittels einer Preßsenkung in Richtung auf die Gegenabstützscheibe 10 vorstehend Klemmbolzen 44 durch Einpressen eines Stempels auf der rückwärtigen Seite eingebracht.

G. Wengler                                    291 P 5

- 14 -

Ist die Gegenabstützscheibe mittels der Halteschraube 9 an dem Lattenrost anliegend angebracht,
so braucht die Abstützscheibe 6 lediglich aufgesteckt zu werden und hält somit automatisch.
In diesem Ausführungsbeispiel sind die Klemmbolzen
quadratisch bzw. rechteckförmig ausgebildet, wobei deren Diagonaldurchmesser geringförmig breiter
ist als der Durchmesser der Haltelöcher 42. Möglich sind aber auch andere Ausbildungsformen.

Durch die Erfindung wird also ein großer Beitrag
zur Senkung der Bearbeitungszeit beim Ausjustieren
von Decken- oder Wandelementen und damit eine deutliche Kostenreduzierung ermöglicht. Dabei kann, wie
dargestellt, die Schraube in einem handelsüblichen
Kunststoffdübel eingedreht werden. Ihr Kopf ist dabei
zwischen der Gegenabstütz- und der Abstützscheibe
eingespannt, wobei deren Form im wesentlichen beliebig gewählt sein kann. Dabei erfüllt die Schraubbefestigung eine Doppelfunktion, sie ist nämlich
gleichzeitig Befestigungs- als auch Verstellelement.
Durch Drehen der Schraube kann der Abstand zur Wand
bzw. zur Decke in Sekundenschnelle verringert oder
vergrößert werden. Dabei bleibt stets eine Hand
frei zum Hantieren mit der Richtlatte und der
Wasserwaage. Wie gezeigt ist dabei die Montage dadurch möglich, daß die Befestigungseinrichtung in
einer Vertiefung in der Unterkonstruktion angebracht
wird.

- 15 -

G. Wengler                    291 P 5

- 15 -

Diese Vertiefung kann beispielsweise in Form einer Senkbohrung mittels eines Stufenbohrers eingebracht werden. Möglich ist aber auch, inbesondere bei Verwendung von rechteckförmigen Abstütz- und Gegenabstützplatten, daß diese bündig bzw. versenkt in einer Nut der Unterkonstruktion eingebracht werden.

Liegen die Abstützscheibe und die Gegenabstützscheibe stumpf auf der Unterkonstruktion auf, so stehen diese beispielsweise 4 mm vor. In diesem Fall sind entsprechende Ausbildungen an den auf die Unterkonstruktion aufbringbaren Bekleidungen erforderlich. Dabei läßt sich die erfindungsgemäße Schraubbefestigung nicht nur für die Montage von Wand- und Deckenverkleidungen, sondern auch für die Türfutter- oder Fensterrahmenmontage hervorragend verwenden. Ganz allgemein also überall dort, wo Bauteile in einem regulierbaren Abstand justiert werden sollen.

. Patentanwalt Dipl.-Phys. Flach, Max-Josefs-Platz 6, D-8200 Rosenheim .

**ROSENHEIM**
Dipl.-Phys. Dieter Flach
Max-Josefs-Platz 6
D-8200 Rosenheim
Telefon: (0 80 31) 1 93 52
Telegramm: Physicist Rosenheim

**MÜNCHEN**
Dipl.-Chem. Dr. Steffen Andrae
Dipl.-Ing. Dietmar Haug
Dipl.-Ing. Dr. Dieter Otto
Steinstraße 44
D-8000 München 80
Telefon: (0 89) 48 20 89
Telegramm: pagema München
Telex: 5 216 281 afho d

— 16 —

Georg Wengler, Bachweg 7, 8229 Kirchanschöring,
Bundesrepublik Deutschland

291 P 5

------------------------------------------------

Schraubbefestigung

------------------------------------------------

Patentansprüche:

1. Schraubbefestigung für eine Unterkonstruktion, insbesondere eine Latte (2) an der Decke oder Wand (1) eines Bauwerks, bei welcher eine Halteschraube (9) von der Unter- oder Außenseite der Unterkonstruktion (2) her durch eine Bohrung in der Unterkonstruktion (2) in einen in der Decke oder Wand (1) gesetzten Dübel (3) einschraubbar ist, dadurch gekennzeichnet, daß an der Unter- oder Außenseite der Unterkonstruktion (2) eine den Halte-

— 17 —

G. Wagler                                   291 P 5

schraubenkopf (8) teilweise abdeckende Abstützscheibe (6) vorgesehen ist, die vorzugsweise in
einer Vertiefung (4) in der Unterkonstruktion (2)
anbringbar ist und die eine zentrale Ausnehmung
(7) von kleinerem Durchmesser als der Halteschraubenkopf (8) aufweist, wobei die Abstützscheibe (6)
mittels mehrerer über den Umfang verteilter Schrauben mit der Unterkonstruktion (2) verbindbar ist.

2. Schraubbefestigung nach Anspruch 1, dadurch gekennzeichnet, daß die Ausnehmung (7) zur Verwendung von Senkkopfschrauben zylindrisch ist (Fig.
1-3).

3. Schraubbefestigung nach Anspruch 1, dadurch gekennzeichnet, daß die Ausnehmung (7) zur Verwendung von Rundkopf-Halteschrauben ballig gestaltet
ist (Fig. 5).

4. Schraubbefestigung nach Anspruch 1, dadurch gekennzeichnet, daß die Ausnehmung (7) zur Verwendung von Zylinderkopf-Halteschrauben abgestuft ausgebildet ist (Fig. 6).

5. Schraubbefestigung nach einem der Ansprüche 1
bis 4, dadurch gekennzeichnet, daß neben der Abstützscheibe (6) eine zwischen dieser und der Unterkonstruktion (2) anbringbare Gegenabstützscheibe (10)
vorgesehen ist, wobei die Gegenabstützscheibe (10)
einen zu der zentralen Ausnehmung (7) konzentrischen

G. Wengler 291 P 5

Schraubenschaftdurchtritt (13) für den Durchtritt der Halteschraube (9) aufweist, dessen kleinster Durchmesser kleiner als der Durchmesser des Halteschraubenkopfes (8) ist.

6. Schraubbefestigung nach Anspruch 5, dadurch gekennzeichnet, daß die Abstützscheibe ( 6 ) mittels Schrauben (11) an der Gegenabstützscheibe (10), und diese wiederum mittels weiterer Schrauben (12) an der Unterkonstruktion (2) befestigbar ist.

7. Schraubbefestigung nach Anspruch 5, dadurch gekennzeichnet, daß die Abstützscheibe (6) mittels Stützschrauben (11), die durch entsprechende Schraubenlöcher (30) in der Gegenabstützscheibe (10) ragen, an der Unterkonstruktion (2) befestigbar ist.

8. Schraubbefestigung nach Anspruch 5 bis 7, dadurch gekennzeichnet, daß die Bohrung (13) zur Verwendung von Rundkopf- und Zylinderkopf-Halteschrauben zylindrisch ist.

9. Schraubbefestigung nach Anspruch 5 bis 7, dadurch gekennzeichnet, daß sich die Bohrung (13) zur Verwendung von Senkkopf-Halteschrauben zu der Lattenunter- oder -außenseite hin konisch erweitert.

10. Schraubbefestigung nach Anspruch 1, 5, 6 oder 7, dadurch gekennzeichnet, daß die Abstützscheibe (6) und gegebenenfalls die Gegenabstützscheibe (10) aus Metall bestehen.

G. Wengler                                    291 P 5

11. Schraubbefestigung nach Anspruch 1, 5, 6 oder 7, dadurch gekennzeichnet, daß die Abstützscheibe (6) und gegebenenfalls die Gegenabstützscheibe (10) aus Kunststoff bestehen.

12. Schraubbefestigung nach einem der Ansprüche 1 bis 11, dadurch gekennzeichnet, daß der Schraubenschaftdurchtritt (13) und/oder die Schraubenlöcher (30) sowie die entsprechenden Löcher in der Abstützscheibe (6) in Form von Preßsenkungen (34; 32) hergestellt sind.

13. Schraubbefestigung nach einem der Ansprüche 5 bis 12, dadurch gekennzeichnet, daß die Abstützscheibe (6) an der Gegenabstützscheibe (10) durch Verkanten bzw. Verklemmen lösbar befestigbar ist.

14. Schraubbefestigung nach Anspruch 13, dadurch gekennzeichnet, daß die in Form einer Preßsenkung (32) ausgebildeten Durchtritte für die Stützschrauben (11) in der Abstützscheibe (6) in den entsprechenden Schraubenlöcher (30) der Gegenabstützscheibe (10) im Klemmsitz eingreifen.

15. Schraubbefestigung nach Anspruch 13, dadurch gekennzeichnet, daß an der Abstützscheibe (6) zu den Schraubenlöchern (30) versetzt angeordnete Klemmbolzen (44) auf die Gegenabstützscheibe (10) zu vorstehend angebracht sind, die in dort vorgesehene Haltelöcher (42) im Klemmsitz eingreifen.

G. Wengler          291 P 5

16. Schraubbefestigung nach Anspruch 13 oder 15, dadurch gekennzeichnet, daß die Klemmbolzen (44) rechteck- oder quadratförmig ausgebildet sind, wobei deren Diagonale nur wenig größer als der Durchmesser der Haltelöcher (42) ist.

FIG. 1

FIG. 2

FIG. 3

FIG. 5

FIG. 4

FIG. 6

FIG. 7

FIG. 8

FIG. 9

FIG. 10

FIG. 11

## EUROPÄISCHER RECHERCHENBERICHT

EP  82 10 7207

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-2 262 890 (BRAAS & CO.)<br>* Seite 5, Zeile 31 - Seite 7, Zeile 16; Figuren 8,9 * | 1,2 | E 04 F 13/08<br>E 04 F 13/10 |
| A,D | DE-A-2 712 670 (FISCHER)<br>* Seite 4, Zeile 20 - Seite 5, Zeile 14; Figur * | 1 | |
| A | CH-A- 596 463 (BUSCH)<br>* Spalte 2, Zeile 66 - Spalte 6, Zeile 22; Figur en * | 1,3,5 | |

RECHERCHIERTE
SACHGEBIETE (Int. Cl. ³)

E 04 F

Der vorliegende Recherchenbericht wurde für alle Patentansprüche erstellt.

| Recherchenort | Abschlußdatum der Recherche | Prüfer |
|---|---|---|
| DEN HAAG | 05-11-1982 | ECKERT K.F. |